# EUROPÄISCHE PATENTSCHRIFT

(11) **EP 3 935 706 B1**
(45) Veröffentlichungstag und Bekanntmachung des Hinweises auf die Patenterteilung: **22.02.2023**
(21) Anmeldenummer: 20714886.7
(22) Anmeldetag: 12.03.2020
(51) Int. Cl.: H02H 9/04, H02J 1/06

(54) **GLEICHSTROMNETZWERK**
DC NETWORK
RÉSEAU DE COURANT CONTINU

(30) Priorität: 08.05.2019 EP 19173331
(43) Veröffentlichungstag der Anmeldung: 12.01.2022
(73) Patentinhaber: Siemens Aktiengesellschaft, 80333 München (DE)
(72) Erfinder: HANDT, Karsten, 92348 Berg (DE); HÄNSEL, Stefan, 91056 Erlangen (DE); KUSCHEL, Boris, 09125 Chemnitz (DE); WEISS, Jörg, 09224 Chemnitz (DE)
(86) Internationale Anmeldenummer: PCT/EP2020/056635
(87) Internationale Veröffentlichungsnummer: WO 2020/224832

(56) Entgegenhaltungen:
- WO-A1-2014/117807
- WO-A1-2016/096016

## Beschreibung

Die Erfindung betrifft ein Gleichstromnetzwerk mit einem ersten und einem zweiten Pol und wenigstens einer Schalteinheit zur Auftrennung eines Leiters des ersten Pols.

DC-Netze sollen in zukünftigen Industrieanlagen Verluste reduzieren, den direkten Energieaustausch zwischen Umrichtern, Speichern und Motoren gewährleisten und eine erhöhte Robustheit erzielen. Netze dieser Art können sehr verschiedenen Kabellängen zwischen den verschiedenen Lastabgängen und Einspeisungen aufweisen. Vorhandene kleine Kabellängen führen dabei zu sehr kleinen Längsinduktivitäten in den Zuleitungen, so dass Fehlerströme sehr steile Stromanstiege aufweisen können. Dadurch sind eine sehr schnelle Fehlererkennung und Fehlerabschaltung erforderlich. Da mechanische Trennschalter die Anforderungen an die Schaltgeschwindigkeit nicht erfüllen können, werden Leistungshalbleiter verwendet. Nach der Fehlererkennung schalten diese in wenigen 100ns den Fehler ab. Da der Strom durch die Lastinduktivitäten nun keinen Freilaufpfad hat, kann sich in der Folge über den Leistungshalbleiter eine Spannung aufbauen, die ihn unter Umständen zerstören kann. Um dem zu begegnen, kann der Schalter eine Überspannungsbegrenzung aufweisen. Nachteilig ist, dass diese für jeden Schalter für die tatsächliche vorliegende Leitungslänge oder Zuleitungsinduktivität ausgelegt sein muss, der Schalter also an die vorliegenden Zuleitungen angepasst werden muss, oder aber ein Schalter nur bis zu einer bestimmten Leitungslänge verwendet werden darf, da ansonsten die Gefahr besteht, dass die Überspannungsbegrenzung nicht ausreicht.

WO 2016/096016 A1 beschreibt ein Gleichstromnetzwerk mit Leitern und Einheiten die eine Schalteinheit und eine Überspannungs-Schutzvorrichtung beinhaltet. 2 Zwischen jedem Leiterabschnitt in dem Gleichstromnetzwerk sitzt außer einer Überspannungs-Schutzvorrichtung, auch eine Schalteinheit.

Es ist Aufgabe der vorliegenden Erfindung, ein Gleichstromnetzwerk anzugeben, das das eingangs genannte Problem vermindert oder löst. Diese Aufgabe wird durch ein Gleichstromnetzwerk mit den Merkmalen von Anspruch 1 gelöst.

Das erfindungsgemäße Gleichstromnetzwerk weist einen elektrischen Leiter und eine an einem Ende des Leiters angeordnete Schalteinheit zur Auftrennung der elektrischen Verbindung über den Leiter auf. Die Schalteinheit umfasst wenigstens einen seriell in den Strompfad des Leiters geschalteten steuerbaren Leistungshalbleiter.

Der Leiter ist von der Schalteinheit ausgehend in einen ersten und einen zweiten Abschnitt unterteilt. Mit anderen Worten erstreckt sich der erste Abschnitt von der Schalteinheit aus bis zu einem Verbindungspunkt von erstem und zweitem Abschnitt. Ab dem Verbindungspunkt erstreckt sich der zweite Abschnitt.

Eine erste Überspannungs-Schutzvorrichtung ist zwischen den Verbindungspunkt von erstem und zweitem Abschnitt und einen zweiten Pol des Gleichstromnetzwerks geschaltet. Der Leiter bildet also den ersten Pol des Gleichstromnetzwerks. Eine zweite Überspannungs-Schutzvorrichtung ist zwischen das von der Schalteinheit abgewandte Ende des zweiten Abschnitts und den zweiten Pol geschaltet. Die erste und zweite Überspannungs-Schutzvorrichtung sind also parallelgeschaltet; zwischen ihren Anschlusspunkten an den Leiter, also den ersten Pol des Gleichstromnetzwerks, befindet sich aber ein Leiterstück mit der Länge des zweiten Abschnitts. Zwischen dem Anschlusspunkt der ersten Überspannungs-Schutzvorrichtung und der Schalteinheit befindet sich ein Leiterstück mit der Länge des ersten Abschnitts.

Die Überspannungs-Schutzvorrichtungen weisen jeweils einen Kondensator auf.

Die Längen von erstem und zweitem Abschnitt betragen dabei zweckmäßig wenigstens mehr als 1 m, insbesondere mehr als 10 m, in einer besonderen Ausgestaltung mehr als 50 m.

Vorteilhaft erreicht die Erfindung, dass die Schalteinheit durch die Überspannungs-Schutzvorrichtungen, die in Abständen am Leiter angeordnet sind, geschützt ist vor dem Aufbau einer Überspannung, die im Zuge einer Abschaltung durch die Schalteinheit auftritt und schädigend oder zerstörend auf den Leistungshalbleiter wirkt. Die Schalteinheit selbst muss dabei nur für Überspannungen ausgelegt sein, die durch die Induktivität des nächstliegenden Abschnitts, also des ersten Abschnitts hervorgerufen werden. Die Induktivität des zweiten Abschnitts dagegen spielt dafür keine Rolle mehr.

Für die Erfindung wurde erkannt, dass an der Stelle von Anpassungen der Schalteinheit Anpassungen des Leiters in Form der Überspannungs-Schutzvorrichtungen verwendet werden können. Somit können bevorzugt gleichartige Schutzvorrichtungen im Gleichstromnetzwerk verwendet werden und auch gleichartige Schalteinheiten. Es werden also im Vergleich zu einem Netzwerk mit angepassten Schalteinheiten zwar mehr Komponenten, aber dafür nur gleichartige Komponenten verwendet, was den Aufwand verringert und die Sicherheit erhöht. Das Gleichstromnetzwerk wird dadurch besser planbar und beherrschbar.

Vorteilhaft bietet die Überspannungs-Schutzvorrichtungen mit dem Kondensator zwischen den Polen des Gleichstromnetzwerks Spannungsstabilität und Regelreserve. Da dieser Kondensator ein schwingfähiges System mit der Leitungsinduktivität bildet, ist ein Reihenwiderstand als Dämpfung vorhanden.

Vorteilhafte Ausgestaltungen des erfindungsgemäßen Gleichstromnetzwerks gehen aus den von Anspruch 1 abhängigen Ansprüchen hervor. Dabei kann die Ausführungsform nach Anspruch 1 mit den Merkmalen eines der Unteransprüche oder vorzugsweise auch mit denen aus mehreren Unteransprüchen kombiniert werden. Demgemäß können noch zusätzlich folgende Merkmale vorgesehen sein:
- Das Gleichstromnetzwerk kann eine oder mehrere Lasten, eine Mehrzahl von weiteren Schalteinheiten und eine Mehrzahl von weiteren elektrischen Leitern umfassen, wobei die weiteren Leiter die Schalteinheiten und Lasten verbinden. Die weiteren Leiter sind ebenfalls in Abschnitte unterteilt, wobei für die Verbindungsstellen jeweils zweier verbundener Abschnitte der weiteren Leiter eine Überspannungs-Schutzvorrichtung zwischen die jeweilige Verbindungsstelle und den zweiten Pol geschaltet ist. Auch in einem ausgedehnten Gleichstromnetzwerk werden also die weiteren Schalteinheiten geschützt vor zu hoher Überspannung durch das Einfügen von Überspannungs-Schutzvorrichtungen in die Leiter.
- Bevorzugt sind in dem Gleichstromnetzwerk die Schalteinheit und die weiteren Schalteinheiten gleich aufgebaut. Mit anderen Worten wird nur ein Typ von Schalteinheit, ausgelegt auf eine maximal zu sperrende Spannung, verwendet. Die Länge oder die Induktivität der Abschnitte ist dabei zweckmäßig so gewählt, dass eine sich bei Abschaltung durch eine der Schalteinheiten ausbildende Überspannung unterhalb der Durchbruchsspannung des steuerbaren Leistungshalbleiters bleibt. Insgesamt werden also vorteilhaft nur zwei verschiedene Typen von Komponente für die Abschaltung im Gleichstromnetzwerk verwendet, nämlich ein Typ von Schalteinheit und ein Typ von Überspannungs-Schutzvorrichtung.
- Die Schalteinheit kann einen Schalteinheits-Kondensator umfassen, der zwischen den ersten und zweiten Pol des Gleichstromnetzwerks geschaltet ist und eine Kapazität von wenigstens 10µF, insbesondere wenigstens 50µF, insbesondere wenigstens 100pF aufweist. Dadurch hat auch der Schalter selbst eine intrinsische Fähigkeit, die Überspannung einer bestimmten Leiter-Induktivität schadlos aufzunehmen.
- Die Kondensatoren der Überspannungs-Schutzvorrichtungen können jeweils eine Kapazität von wenigstens 10 µF, insbesondere wenigstens 50 µF, insbesondere wenigstens 100 µF aufweisen. Erst ausreichend hohe Kapazitäten wirken ausreichend stabilisierend auf die Spannung, um die Schalteinheit wirkungsvoll zu entlasten.
- Die Überspannungs-Schutzvorrichtungen können jeweils einen Widerstand zur Schwingungsdämpfung in Serienschaltung zum Kondensator aufweisen, insbesondere einen Widerstand, der kleiner als 10 Ohm ist. Damit werden Schwingungen im schwingfähigen System aus dem Kondensator und den Leitungsinduktivitäten vermieden, wobei gleichzeitig durch den geringen Widerstand die Möglichkeit einer schnellen Aufladung des Kondensators gewahrt bleibt.
- Die Überspannungs-Schutzvorrichtung kann eine Diode in Serienschaltung zum Kondensator umfassen, wobei die Diode so geschaltet ist, dass Stromfluss vom Kondensator zum ersten Pol des Gleichstromnetzwerks blockiert wird. Diese Beschaltung erlaubt ein schnelles Aufnehmen der Energie durch den Kondensator im Falle des Abschaltens im Kurzschlussfall. Das Entladen wird zweckmäßig weiterhin erlaubt, aber gebremst durch den Widerstand.
- Die Überspannungs-Schutzvorrichtung kann eine Funkenstrecke in Serienschaltung zum Kondensator umfassen. Diese schafft beim Aufbau einer unzulässig hohen Spannung über dem Widerstand einen niederohmigen Strompfad, der ein schnelles Aufnehmen der Energie durch den Kondensator ermöglicht.
- Die Überspannungs-Schutzvorrichtung kann einen steuerbaren Leistungshalbleiter parallel zum Widerstand aufweisen, insbesondere einen Thyristor. Dadurch wird es möglich, den niederohmigen Strompfad zuzuschalten.
- Die Überspannungs-Schutzvorrichtung kann parallel zum Kondensator ein Überspannungselement, insbesondere einen Varistor umfassen. Ferner kann parallel zum Kondensator ein Entladewiderstand vorhanden sein, wobei dieser insbesondere größer als 1 kOhm, insbesondere größer als 10 kOhm oder größer als 100 kOhm ist. Dadurch wird das Entladen des Kondensators unterstützt, indem bei zu hoher Spannung auf dem Kondensator die Energie abgeführt wird und die Überspannungs-Schutzvorrichtung bei wiederholtem Auslösen schnell wieder einsatzbereit gemacht.
- Die Schalteinrichtung kann einen zweiten Leistungshalbleiter umfassen, wobei die beiden Leistungshalbleiter antiseriell oder antiparallel geschaltet sind. Bei den Leistungshalbleitern kann es sich beispielsweise um IGBTs handeln.

Weitere Vorteile und Merkmale sind der folgenden Beschreibung von Ausführungsbeispielen anhand der Figuren zu entnehmen. In den Figuren bezeichnen gleiche Bezugszeichen gleiche Bauteile und Funktionen.

Es zeigen:
Figur 1 ein Gleichstromnetzwerk mit Schalteinheiten zur Auftrennung elektrischer Leiter und Überspannungs-Schutzvorrichtungen
Figuren 2 bis 6 Varianten der Überspannungs-Schutzvorrichtungen.

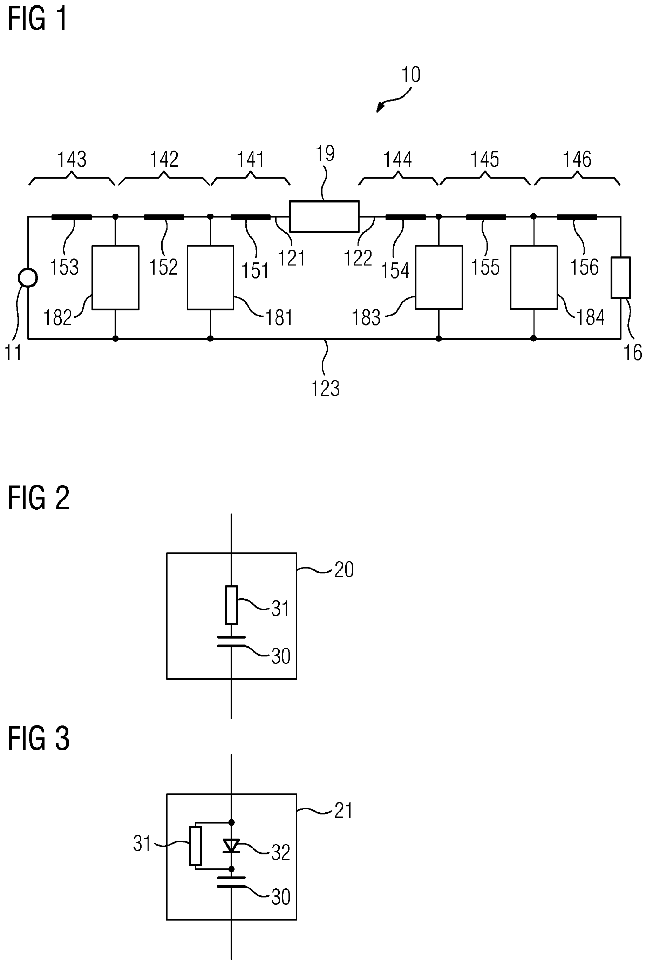

Figur 1 zeigt schematisiert ein Gleichstromnetzwerk 10. Das Gleichstromnetzwerk 10 umfasst eine Gleichspannungsquelle 11 und eine Last 16, die durch elektrische Leiter 121...123 miteinander verbunden sind. Dabei bilden die ersten zwei Leiter 121, 122 gemeinsam einen ersten Pol des Gleichstromnetzwerks 10, während der dritte Leiter 123 den zweiten Pol bildet. Die ersten zwei Leiter 121, 122 sind in Reihe zueinander geschaltet, wobei an ihrer Verbindungsstelle eine Schalteinheit 19 angeordnet ist.

Die Schalteinheit 19 dient als Unterbrecher für die elektrische Verbindung von der Gleichspannungsquelle 11 zur Last 16. Eine Unterbrechung kann beispielsweise notwendig sein, wenn im Bereich der Last 16 ein Fehler, also ein Kurzschluss auftritt und sehr hoher Strom von der Gleichspannungsquelle 11 zu der Kurzschluss-Stelle fließen würde. Die Schalteinheit 19 umfasst zumindest einen Leistungshalbleiter, der seriell zwischen die beiden ersten Leiter 121, 122 geschaltet ist und den Strompfad durch diese Leiter unterbrechen kann. In alternativen Ausgestaltungen kann die Schalteinheit 19 auch zwei Leistungshalbleiter umfassen, die antiseriell geschaltet sind.

Da bei einer Unterbrechung des Strompfads durch die Schalteinheit 19 kein Freilaufpfad für den Strom vorhanden ist, entsteht kurz nach der Unterbrechung eine überhöhte Spannung über die Schalteinheit 19, also über den Leistungshalbleiter. Die Höhe der überhöhten Spannung hängt unter anderem von der Größe der Induktivität ab, in der elektrische Energie gespeichert ist. Diese wiederum wird maßgeblich durch die Induktivität der an die Schalteinheit angrenzenden ersten zwei Leiter 121, 122 bestimmt. Je länger diese Leiter 121, 122 sind, desto größer ist ihre Induktivität. Um die Schalteinheit 19 nicht an die Leiterlänge anpassen zu müssen, sind die ersten zwei Leiter 121, 122 in Abschnitte 141...146 unterteilt. Die Abschnitte 141...146 sind dabei in diesem Beispiel so gewählt, dass die Leiterlänge jedes Abschnitts 141...146 nicht mehr als 100 m beträgt. Damit ist die maximale Induktivität jedes der Abschnitte 141...146 festgelegt. In einer alternativen Ausgestaltung werden die Abschnitte 141...146 nach einer festgelegten maximalen Induktivität von beispielsweise 50 µH gewählt. Bei dieser Variante muss vorteilhaft nicht beachtet werden, ob die Leiter 121, 122 gleichartig sind oder ob verschiedene elektrische Leiter zum Einsatz kommen, um eine maximale Induktivität pro Abschnitt 141...146 zu wahren.

An der Verbindungsstelle zwischen je zwei benachbarten Abschnitten 141...146 ist eine Überspannungs-Schutzvorrichtung 181...184 angeordnet. Die Überspannungs-Schutzvorrichtung 181...184 ist dabei zwischen die Verbindungsstelle, die in den ersten zwei Leitern 121, 122 liegt und somit Teil des ersten Pols des Gleichstromnetzwerks 10 ist und den zweiten Pol in Form des dritten Leiters 123 geschaltet. Die Überspannungs-Schutzvorrichtungen 181, 182 im ersten Leiter 121 sind also - abgesehen von der Induktivität 152 des zwischenliegenden zweiten Abschnitts 142 - parallelgeschaltet. Ebenso sind die Überspannungs-Schutzvorrichtungen 183, 184 im zweiten Leiter 122 - abgesehen von der Induktivität 155 des zwischenliegenden fünften Abschnitts 145 - parallelgeschaltet.

Die Überspannungs-Schutzvorrichtungen 181...184 sorgen dafür, dass bei einer Unterbrechung des Stromflusses durch die Schalteinheit 19 die Entstehung von Überspannungen in den Leitern 121, 122 abschnittsweise verhindert oder verzögert wird. Dadurch wird erreicht, dass eine sich entwickelnde Überspannung an der Schalteinheit 19 begrenzt ist auf die Wirkung der Induktivität derjenigen Abschnitte 141, 144, die direkt an der Schalteinheit 19 anliegen. Die Schalteinheit 19 ist zweckmäßig ausgelegt für derartige Überspannungen. Dadurch wird also erreicht, dass die Schalteinheit 19 ohne eine Anpassung auch dann verwendet werden kann, wenn die anliegenden elektrischen Leiter 121, 122 wesentlich länger sind als es der für die Schalteinheit 19 maximale Induktivitätswert erlauben würde. An die Stelle einer Änderung in der Schalteinheit 19 tritt also eine Anpassung der Gestaltung der Leiter 121, 122, die mit den Überspannungs-Schutzvorrichtungen 181...184 versehen werden. Die Schalteinheit selbst hat einen nicht gezeigten Überspannungsschutz, der ausreichend ist für die an der Schalteinheit anliegende Leitungslänge oder Induktivität, beispielsweise einen Überspannungsschutz für eine Induktivität von 100 µH.

Ein reales Gleichstromnetzwerk 10 in einer industriellen Umgebung ist typischerweise komplexer und umfasst mehrere Lasten 16, mehrere elektrische Leiter 121...123 von teilweise unterschiedlicher Länge und eine Mehrzahl von Schalteinheiten 19. Es kann ferner auch Verzweigungen aufweisen. Daher ist das Gleichstromnetzwerk 10 der Figur 1 als ein vereinfachter Ausschnitt eines realen Gleichstromnetzwerks zu sehen. Durch die Erfindung ist es aber möglich, auch in einem ausgedehnten Gleichstromnetzwerk 10 nur Schalteinheiten 19 eines einzigen Aufbaus zu verwenden. Auch die Überspannungs-Schutzvorrichtungen 181...184 weisen bevorzugt nur einen Aufbau auf.

Mögliche Varianten für den Aufbau der Überspannungs-Schutzvorrichtungen 181...184 sind in den Figuren 2 bis 6 dargestellt. Dem Prinzip nach und als einfachste Ausführungsvariante ist als Überspannungs-Schutzvorrichtungen 181...184 ein Kondensator 30 ausreichend. Dieser stellt Spannungsstabilität und Regelreserve zur Verfügung. Da dieser Kondensator 30 aber ein schwingfähiges System mit der Leitungsinduktivität 151...156 bildet, ist ein Reihenwiderstand 31 als Dämpfung vorteilhaft. Diese Überspannungs-Schutzvorrichtung 20 ist in Figur 2 dargestellt.

Figur 3 zeigt eine erweiterte Überspannungs-Schutzvorrichtung 21 nach der Ausführung von Figur 2, bei der parallel zum Reihenwiderstand 31 eine Diode 32 vorhanden ist. Diese bewirkt, dass der Kondensator 30 sehr schnell Energie aufnehmen kann, was in der Ausführung nach Figur 2 durch den Reihenwiderstand 31 begrenzt wird. Gerade beim Abschalten eines Kurzschlusses ist eine sehr schnelle Aufnahme der Energie wichtig. Das Entladen wird aber weiterhin durch den Reihenwiderstand 31 gedämpft.

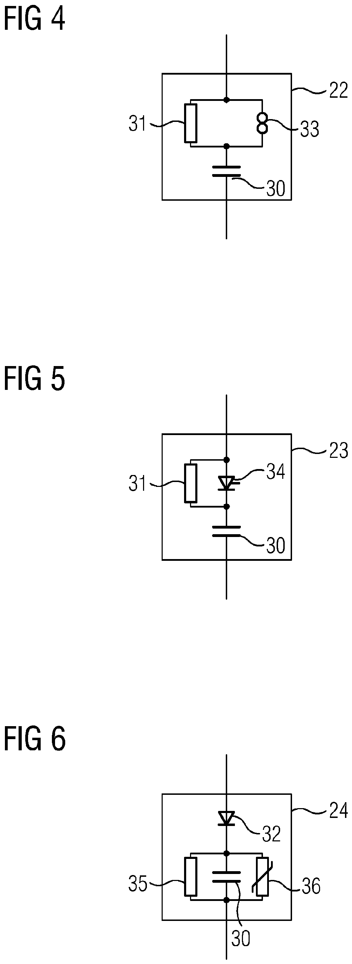

Eine Alternative zur Verwendung der Diode 32 zeigt Figur 4. In dem Überspannungs-Schutzvorrichtung 22 gemäß Figur 4 ist parallel zum Reihenwiderstand 31 eine Funkenstrecke 33 angeordnet, um beim Aufbau einer unzulässig hohen Spannung über dem Reihenwiderstand 31 einen niederohmigen Strompfad zu schaffen. Wird die Spannung über der Funkenstrecke 33 klein genug, verlischt der Lichtbogen in der Funkenstrecke 33 wieder. Das Entladen des Kondensators 30 erfolgt wieder über den Reihenwiderstand 31.

Eine weitere Alternative ist in Figur 5 dargestellt. Bei dieser Überspannungs-Schutzvorrichtung 23 ist der niederohmige Strompfad zuschaltbar durch ein getriggertes Halbleiterbauelement wie in diesem Beispiel durch den Thyristor 34. Wird hier der Strom durch den Thyristor 34 kleiner als sein Haltestrom, dann wird dieser wieder hochohmig. Das Entladen des Kondensators 30 erfolgt wieder über den Reihenwiderstand 31.

In der Überspannungs-Schutzvorrichtung 24 gemäß Figur 6 wird das Entladen des Kondensators 30 unterstützt durch einen Entladewiderstand 35 und ein Überspannungselement wie den hier gezeigten Varistor 36, um bei zu hoher Spannung auf dem Kondensator 30 die Energie abzuführen und die Schutzschaltung bei wiederholtem Auslösen schnell wieder einsatzbereit zu machen. Dabei sind der Entladewiderstand 35 und der Varistor 36 parallel zum Kondensator 30 angeordnet. In Serie zum Kondensator 30 ist in diesem Beispiel eine Diode 32 angeordnet. Dabei ist dieses Beispiel aber auch kombinierbar mit den Ausführungen der Figuren 3 bis 5, d.h. hier kann auch ein Reihenwiderstand 31 oder eine Funkenstrecke 33 in Reihe zum Kondensator 30 verwendet werden.

### Bezugszeichenliste

- 10: Gleichstromnetzwerk
- 121...123: elektrische Leitung
- 141...146: Abschnitt
- 151...156: Induktivität der Abschnitte
- 11: Gleichspannungsquelle
- 19: Schalteinheit
- 16: Last
- 181...186: Überspannungs-Schutzvorrichtung
- 20...24: Varianten der Überspannungs-Schutzvorrichtung
- 30: Kondensator
- 31: Reihenwiderstand
- 32: Diode
- 33: Funkenstrecke
- 34: Thyristor
- 35: Entladewiderstand
- 36: Varistor

## Patentansprüche

1. Gleichstromnetzwerk (10) mit einem elektrischen Leiter (121, 122) und einer an einem Ende des Leiters (121, 122) angeordneten Schalteinheit (19) zur Auftrennung der elektrischen Verbindung über den Leiter (121, 122), wobei die Schalteinheit (19) wenigstens einen seriell in den Strompfad des Leiters (121, 122) geschalteten steuerbaren Leistungshalbleiter umfasst, wobei
- der Leiter (121, 122) von der Schalteinheit (19) ausgehend in einen ersten und einen zweiten Abschnitt (141, 142, 144, 145) unterteilt ist,
- eine erste Überspannungs-Schutzvorrichtung (181, 183) zwischen den Verbindungspunkt von erstem und zweitem Abschnitt (141, 142, 144, 145) und einen zweiten Pol des Gleichstromnetzwerks (10) geschaltet ist,
- eine zweite Überspannungs-Schutzvorrichtung (182, 184) zwischen das von der Schalteinheit (19) abgewandte Ende des zweiten Abschnitts (142, 145) und den zweiten Pol geschaltet ist,
- die erste und zweite Überspannungs-Schutzvorrichtung (181...184) abgesehen von der Induktivität des zwischenliegenden Abschnitts des Leiters (121, 122) parallelgeschaltet sind,
- die Überspannungs-Schutzvorrichtungen (181...184) jeweils einen Kondensator (30) aufweisen.

2. Gleichstromnetzwerk (10) nach Anspruch 1 mit wenigstens einer Last (16), einer Mehrzahl von weiteren Schalteinheiten und einer Mehrzahl von weiteren elektrischen Leitern, die die Schalteinheiten und Last (16) verbinden und in Abschnitte unterteilt sind, wobei für die Verbindungsstellen jeweils zweier verbundener Abschnitte der weiteren Leiter eine Überspannungs-Schutzvorrichtung zwischen die Verbindungsstelle und den zweiten Pol geschaltet ist.

3. Gleichstromnetzwerk (10) nach Anspruch 2, bei dem die Schalteinheit (19) und die weiteren Schalteinheiten gleich aufgebaut sind.

4. Gleichstromnetzwerk (10) nach einem der vorangehenden Ansprüche, bei dem die Länge oder die Induktivität der Abschnitte (141...146) so gewählt ist, dass eine sich bei Abschaltung durch die Schalteinheit (19) ausbildende Überspannung unterhalb der Durchbruchsspannung des steuerbaren Leistungshalbleiters bleibt.

5. Gleichstromnetzwerk (10) nach einem der vorangehenden Ansprüche, bei dem die Schalteinheit (19) einen Schalteinheits-Kondensator umfasst, der zwischen den ersten und zweiten Pol des Gleichstromnetzwerks geschaltet ist und eine Kapazität von wenigstens 10µF, insbesondere wenigstens 50µF, insbesondere wenigstens 100pF aufweist.

6. Gleichstromnetzwerk (10) nach einem der vorangehenden Ansprüche, bei dem die Kondensatoren (30) der Überspannungs-Schutzvorrichtungen (181...184) jeweils eine Kapazität von wenigstens 10 µF, insbesondere wenigstens 50 µF, insbesondere wenigstens 100 µF aufweisen.

7. Gleichstromnetzwerk (10) nach einem der vorangehenden Ansprüche, bei dem die Überspannungs-Schutzvorrichtungen (181...184) jeweils einen Widerstand (31) zur Schwingungsdämpfung in Serienschaltung zum Kondensator (30) aufweisen, insbesondere einen Widerstand, der kleiner als 10 Ohm ist.

8. Gleichstromnetzwerk (10) nach einem der vorangehenden Ansprüche, bei dem die Überspannungs-Schutzvorrichtungen (181...184) jeweils eine Diode (32) in Serienschaltung zum Kondensator (30) umfassen, wobei die Diode (32) geschaltet ist, Stromfluss vom Kondensator (30) zum ersten Pol zu blockieren.

9. Gleichstromnetzwerk (10) nach einem der vorangehenden Ansprüche, bei dem die Überspannungs-Schutzvorrichtungen (181...184) eine Funkenstrecke (33) in Serienschaltung zum Kondensator (30) umfassen.

10. Gleichstromnetzwerk (10) nach einem der vorangehenden Ansprüche, bei dem die Überspannungs-Schutzvorrichtungen (181...184) einen steuerbaren Leistungshalbleiter in Serienschaltung zum Kondensator (30) aufweisen, insbesondere einen Thyristor (34).

11. Gleichstromnetzwerk (10) nach einem der vorangehenden Ansprüche, bei dem die Überspannungs-Schutzvorrichtungen (181...184) parallel zum Kondensator (30) ein Überspannungselement, insbesondere einen Varistor (36) umfassen.

12. Gleichstromnetzwerk (10) nach einem der vorangehenden Ansprüche, bei dem die Überspannungs-Schutzvorrichtungen (181...184) parallel zum Kondensator (30) einen Entladewiderstand (35) umfassen.

## Claims

1. DC network (10) having an electrical conductor (121, 122) and a switching unit (19) arranged at one end of the conductor (121, 122) to break the electrical connection via the conductor (121, 122), wherein the switching unit (19) comprises at least one controllable power semiconductor that is connected in series in the current path of the conductor (121, 122), wherein
- the conductor (121, 122) is divided into a first and a second section (141, 142, 144, 145), starting from the switching unit (19),
- a first overvoltage protection apparatus (181, 183) is connected between the connecting point for the first and second sections (141, 142, 144, 145) and a second pole of the DC network (10),
- a second overvoltage protection apparatus (182, 184) is connected between that end of the second section (142, 145) that is remote from the switching unit (19) and the second pole,
- the first and second overvoltage protection apparatuses (181...184), barring the inductance of the interposed section of the conductor (121, 122), are connected in parallel,
- the overvoltage protection apparatuses (181...184) each have a capacitor (30).

2. DC network (10) according to Claim 1, having at least one load (16), a plurality of further switching units and a plurality of further electrical conductors that connect the switching units and load (16) and are divided into sections, wherein, for the connecting points for each pair of connected sections of the further conductors, an overvoltage protection apparatus is connected between the connecting point and the second pole.

3. DC network (10) according to Claim 2, in which the switching unit (19) and the further switching units are of the same design.

4. DC network (10) according to one of the preceding claims, in which the length or the inductance of the sections (141...146) is chosen in such a way that an overvoltage that forms in the event of disconnection by the switching unit (19) remains below the breakdown voltage of the controllable power semiconductor.

5. DC network (10) according to one of the preceding claims, in which the switching unit (19) comprises a switching unit capacitor that is connected between the first and second poles of the DC network and has a capacitance of at least 10 µF, in particular at least 50 µF, in particular at least 100 µF.

6. DC network (10) according to one of the preceding claims, in which the capacitors (30) of the overvoltage protection apparatuses (181...184) each have a capacitance of at least 10 µF, in particular at least 50 µF, in particular at least 100 µF.

7. DC network (10) according to one of the preceding claims, in which the overvoltage protection apparatuses (181...184) each have an oscillation damping resistor (31) connected in series with the capacitor (30), in particular a resistor with a value of less than 10 ohms.

8. DC network (10) according to one of the preceding claims, in which the overvoltage protection apparatuses (181...184) each comprise a diode (32) connected in series with the capacitor (30), wherein the diode (32) is connected to block a flow of current from the capacitor (30) to the first pole.

9. DC network (10) according to one of the preceding claims, in which the overvoltage protection apparatuses (181...184) comprise a spark gap (33) connected in series with the capacitor (30).

10. DC network (10) according to one of the preceding claims, in which the overvoltage protection apparatuses (181...184) have a controllable power semiconductor, in particular a thyristor (34), connected in series with the capacitor (30).

11. DC network (10) according to one of the preceding claims, in which the overvoltage protection apparatuses (181...184) comprise an overvoltage element, in particular a varistor (36), in parallel with the capacitor (30).

12. DC network (10) according to one of the preceding claims, in which the overvoltage protection apparatuses (181...184) comprise a discharge resistor (35) in parallel with the capacitor (30).

## Revendications

1. Réseau (10) de courant continu comprenant un conducteur (121, 122) électrique et, disposée à un bout du conducteur (121, 122), une unité (19) de coupure pour la séparation de la liaison électrique par le conducteur (121, 122), dans lequel l'unité (19) de coupure comprend au moins un semiconducteur de puissance pouvant être commandé et monté en série dans le trajet de courant du conducteur (121, 122), dans lequel
- le conducteur (121, 122) est, à partir de l'unité (19) de coupure, subdivisé en un premier et en un deuxième tronçons (141, 142, 144, 145),
- un premier dispositif (181, 183) de protection vis-à-vis de la surtension est monté entre le point de liaison du premier et du deuxième tronçons (141, 142, 144, 145) et un deuxième pôle du réseau (10) de courant continu,
- un deuxième dispositif (182, 184) de protection vis-à-vis de la surtension est monté entre le bout, non tourné vers l'unité (19) de coupure, du deuxième tronçon (142, 145) et le deuxième pôle,
- le premier et le deuxième dispositifs (181...184) de protection vis-à-vis de la surtension sont, indépendamment de l'inductance du tronçon, interposé entre eux, du conducteur (121, 122), montés en parallèle,
- les dispositifs (181...184) de protection vis-à-vis de la surtension ont chacun un condensateur (30).

2. Réseau (10) de courant continu suivant la revendication 1, comprenant au moins une charge (16), une pluralité d'autres unités de coupure et une pluralité d'autres conducteurs électriques, qui relient les unités de coupure et la charge (16) et sont subdivisés en tronçons, dans lequel, pour les points de liaison de respectivement deux tronçons reliés des autres conducteurs, un dispositif de protection vis-à-vis de la surtension est monté entre le point de liaison et le deuxième pôle.

3. Réseau (10) de courant continu suivant la revendication 2, dans lequel l'unité (19) de coupure et les autres unités de coupure sont constituées pareillement.

4. Réseau (10) de courant continu suivant l'une des revendications précédentes, dans lequel la longueur ou l'inductance des tronçons (141...146) est choisie de manière à conserver une surtension, se constituant lors de la coupure par l'unité (19) de coupure, en-dessous de la tension de claquage du semiconducteur de puissance pouvant être commandé.

5. Réseau (10) de courant continu suivant l'une des revendications précédentes, dans lequel l'unité (19) de coupure comprend un condensateur d'unité de coupure, qui est monté entre le premier et le deuxième pôles du réseau de courant continu et qui a une capacité d'au moins 10µF, notamment d'au moins 50µF, notamment d'au moins d'au moins 100µF.

6. Réseau (10) de courant continu suivant l'une des revendications précédentes, dans lequel les condensateurs (30) des dispositifs (181...184) de protection vis-à-vis de la surtension ont chacun une capacité d'au moins 10µF, notamment d'au moins 50µF, notamment d'au moins 100µF.

7. Réseau (10) de courant continu suivant l'une des revendications précédentes, dans lequel les dispositifs (181...184) de protection vis-à-vis de la surtension ont chacun une résistance (31) d'amortissement des oscillations en montage série avec le condensateur (30), notamment une résistance, qui est plus petite que 10 Ohm.

8. Réseau (10) de courant continu suivant l'une des revendications précédentes, dans lequel les dispositifs (181...184) de protection vis-à-vis de la surtension comprennent chacun une diode (32) en montage en série avec le condensateur (30), la diode (32) étant montée de manière à bloquer un flux de courant du condensateur (30) au premier pôle.

9. Réseau (10) de courant continu suivant l'une des revendications précédentes, dans lequel les dispositifs (181...184) de protection vis-à-vis de la surtension comprennent un éclateur (33) en montage en série avec le condensateur (30).

10. Réseau (10) de courant continu suivant l'une des revendications précédentes, dans lequel les dispositifs (181..184) de protection vis-à-vis de la surtension ont un semiconducteur de puissance pouvant être commandé en montage en série avec le condensateur (30), notamment un thyristor (34).

11. Réseau (10) de courant continu suivant l'une des revendications précédentes, dans lequel les dispositifs (181...184) de protection vis-à-vis de la surtension comprennent, en parallèle avec le condensateur (30), un élément de surtension, notamment une varistance (36).

12. Réseau (10) de courant continu suivant l'une des revendications précédentes, dans lequel les dispositifs (181...184) de protection vis-à-vis de la surtension comprennent une résistance (35) de décharge en parallèle avec le condensateur (30) .
